(19) Europäisches Patentamt
European Patent Office
Office européen des brevets

(11) EP 1 778 788 B1

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(21) Anmeldenummer: **05768663.6**

(22) Anmeldetag: **02.08.2005**

(51) Int Cl.:
***C08L 67/02*** *(2006.01)*

(86) Internationale Anmeldenummer:
**PCT/EP2005/008339**

(87) Internationale Veröffentlichungsnummer:
**WO 2006/018127 (23.02.2006 Gazette 2006/08)**

(54) **SCHLAGZÄHMODIFIZIERTE POLYESTER MIT HYPERVERZWEIGTEN POLYESTERN/ POLYCARBONATEN**

IMPACT-RESISTANT MODIFIED POLYESTER COMPRISING HYPERBRANCHED POLYESTERS/ POLYCARBONATES

POLYESTERS A RESILIENCE MODIFIEE CONTENANT DES POLYESTERS/POLYCARBONATES HYPER-RAMIFIES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.08.2004 DE 102004038979**

(43) Veröffentlichungstag der Anmeldung:
**02.05.2007 Patentblatt 2007/18**

(73) Patentinhaber: **BASF SE**
**67056 Ludwigshafen (DE)**

(72) Erfinder:
- **EIPPER, Andreas**
**67067 Ludwigshafen (DE)**
- **BRUCHMANN, Bernd**
**67251 Freinsheim (DE)**
- **WEISS, Carsten**
**67063 Ludwigshafen (DE)**
- **STUMBE, Jean-Francois**
**F-67200 Strasbourg (FR)**

(56) Entgegenhaltungen:
**EP-A- 1 424 360**
**WO-A-01/38436**
**WO-A-02/32982**
**WO-A-2005/075563**
**WO-A-2005/075565**
**DE-A1- 10 136 911**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft thermoplastische Formmassen, enthaltend

A) 10 bis 98 Gew.-% mindestens eines thermoplastischen Polyesters,
B) 0,01 bis 50 Gew.-%

B1) mindestens eines hoch- oder hyperverzweigten Polycarbonates mit einer OH-Zahl von 1 bis 600 mg KOH/g Polycarbonat (gemäß DIN 53240, Teil 2), oder
B2) mindestens eines hoch- oder hyperverzweigten Polyesters des Typs $A_xB_y$ mit x mindestens 1,1 und y mindestens 2,1 oder deren Mischungen

C) 1 bis 40 Gew.-% eines schlagzähmodifizierenden Polymeren,
D) 0 bis 60 Gew.-% weiterer Zusatzstoffe,

wobei die Summe der Gewichtsprozente der Komponenten A) bis D) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Polycarbonate werden üblicherweise aus der Reaktion von Alkoholen mit Phosgen oder aus der Umesterung von Alkoholen oder Phenolen mit Dialkyl- oder Diarylcarbonaten erhalten. Technisch bedeutend sind aromatische Polycarbonate, die zum Beispiel aus Bisphenolen hergestellt werden, aliphatische Polycarbonate spielen vom Marktvolumen her gesehen bisher eine untergeordnete Rolle. Siehe dazu auch Becker/Braun, Kunststoff-Handbuch Bd. 3/1, Polycarbonate, Polyacetale, Polyester, Celluloseester, Carl-Hanser-Verlag, München 1992, Seiten 118 - 119.

Die beschriebenen aliphatischen Polycarbonate sind in der Regel linear oder aber mit einem geringen Verzweigungsgrad aufgebaut. So beschreibt die US 3,305,605 die Verwendung fester linearer Polycarbonate mit einer Molmasse oberhalb 15000 Da als Weichmacher für Polyvinylpolymere.

Zur Verbesserung der Fließfähigkeit werden üblicherweise zu Thermoplasten niedermolekulare Additive zugegeben. Die Wirkung derartiger Additive ist jedoch stark beschränkt, da z.B. die Abnahme der mechanischen Eigenschaften bei Erhöhung der Zugabemenge des Additivs nicht mehr tolerierbar ist.

Definiert aufgebaute, hochfunktionelle Polycarbonate sind erst seit kurzer Zeit bekannt.

S. P. Rannard und N. J. Davis, J. Am. Chem. Soc. 2000, 122, 11729, beschreiben die Herstellung von perfekt verzweigten dendrimeren Polycarbonaten durch Reaktion von Carbonylbisimidazol als Phosgen-analoger Verbindung mit Bis-hydroxyethylamino-2-propanol. Synthesen zu perfekten Dendrimeren sind vielstufig, daher kostenintensiv und für die Übertragung in einen industriellen Maßstab eher ungeeignet.

D.H. Bolton und K. L. Wooley, Macromolecules 1997, 30, 1890, beschreiben die Herstellung von hochmolekularen, sehr starren hyperverzweigten aromatischen Polycarbonaten durch Umsetzung von 1,1,1-Tris(4'-hydroxy)phenylethan mit Carbonylbisimidazol.

Hyperverzweigte Polycarbonate lassen sich auch gemäß WO 98/50453 herstellen. Nach dem dort beschriebenen Verfahren werden Triole wiederum mit Carbonylbisimidazol umgesetzt. Es entstehen zunächst Imidazolide, die dann intermolekular zu den Polycarbonaten weiterreagieren. Nach der genannten Methode fallen die Polycarbonate als farblose oder blassgelbe gummiartige Produkte an.

Die genannten Synthesen zu hoch- oder hyperverzweigten Polycarbonaten weisen folgende Nachteile auf:

a) die hyperverzweigten Produkte sind entweder hochschmelzend oder aber gummiartig, dadurch wird eine spätere Verarbeitbarkeit deutlich eingeschränkt.
b) während der Reaktion freiwerdendes Imidazol muß aufwändig aus dem Reaktionsgemisch entfernt werden.
c) die Reaktionsprodukte enthalten immer terminale Imidazolid-Gruppen. Diese Gruppen sind labil und müssen über einen Folgeschritt z.B. in Hydroxylgruppen umgewandelt werden.
d) Carbonyldiimidazol ist eine vergleichsweise teure Chemikalie, die die Einsatzstoffkosten stark erhöht.

Zur Verbesserung der Fließfähigkeit werden üblicherweise zu teilkristallinen Thermoplasten niedermolekulare Additive zugegeben. Die Wirkung derartiger Additive ist jedoch stark beschränkt, da z.B. die Abnahme der mechanischen Eigenschaften ab einer bestimmten Zugabemenge des Additivs nicht mehr tolerierbar ist.

Aus der WO-97/45474 sind Thermoplastzusammensetzungen bekannt, welche dendrimere Polyester als $AB_2$-Molekül in einem Polyester enthalten. Hierbei reagiert ein mehrfunktioneller Alkohol als Kernmolekül mit Dimethylpropionsäure als $AB_2$-Molekül zu einem dendrimeren Polyester. Dieser enthält nur OH-Funktionalitäten am Ende der Kette. Nachteilig an diesen Mischungen ist die hohe Glastemperatur der dendrimeren Polyester, die vergleichsweise aufwändige Herstellung und vor allem die schlechte Löslichkeit der Dendrimere in der Polyestermatrix.

Gemäß der Lehre der DE-A 101 32 928 führt die Einarbeitung derartiger Verzweiger mittels Konfektionierung und Nachkondensation in fester Phase zu einer Verbesserung der Mechanik (Molekulargewichtsaufbau). Nachteilig an der beschriebenen Verfahrensvariante ist die lange Herstellzeit sowie bereits oben aufgeführten nachteiligen Eigenschaften.

In den DE 102004 005652.8 und DE 102004 005657.9 wurden bereits neue Additive zur Fließverbesserung für Polyester vorgeschlagen.

Der vorliegenden Erfindung lag daher die Aufgabe zugrunde, thermoplastische Polyesterformmassen zur Verfügung zu stellen, welche eine gute Fließfähigkeit und gleichzeitig gute mechanische Eigenschaften aufweisen.

Demgemäß wurden die eingangs definierten Formmassen gefunden. Bevorzugte Ausführungsformen sind den Unteransprüchen zu entnehmen.

Als Komponente (A) enthalten die erfindungsgemäßen Formmassen 10 bis 98, bevorzugt 30 bis 97,99 und insbesondere 30 bis 95 Gew.-% mindestens eines thermoplastischen Polyesters, welcher verschieden von B) ist.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppenwie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im allgemeinen:

1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall

werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05%.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

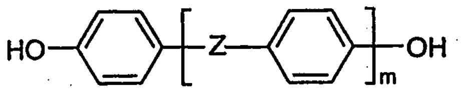 ,

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch $C_1$-$C_6$-Alkyl- oder Alkoxygruppen und Fluor, Chlor oder Brom als Substituenten tragen.

Als Stammkörper dieser Verbindungen seinen beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US_A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel

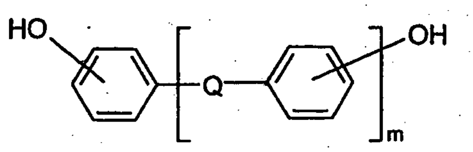

worin Q eine Einfachbindung, eine $C_1$- bis $C_8$-Alkylen-, eine $C_2$- bis $C_3$-Alkyliden-, eine $C_3$- bis $C_6$-Cycloalkylidengruppe, eine $C_6$- bis $C_{12}$-Arylengruppe sowie -O-, -S- oder -$SO_2$- bedeutet und m eine ganze Zahl von 0 bis 2 ist.

Die Diphenole können an den Phenylenresten auch Substituenten haben wie $C_1$- bis $C_6$-Alkyl oder $C_1$- bis $C_6$-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol; gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

Als Komponente B) enthalten die erfindungsgemäßen Formmassen 0,01 bis 50, vorzugsweise 0,5 bis 20 und insbesondere 0,7 bis 10 Gew.-% B1) mindestens eines hoch- oder hyperverzweigten Polycarbonates, mit einer OH-Zahl von 1 bis 600, vorzugsweise 10 bis 550 und insbesondere von 50 bis 550 mg KOH/g Polycarbonat (gemäß DIN 53240, Teil 2) oder mindestens eines hyperverzweigten Polyesters als Komponente B2) oder deren Mischungen wie nachstehend erläutert wird.

Unter hyperverzweigten Polycarbonaten B1) werden im Rahmen dieser Erfindung unvernetzte Makromoleküle mit Hydroxyl- und Carbonatgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge

der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, . 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30 und ist definiert als

$$DB = \frac{T+Z}{T+Z+L} \times 100\%,$$

(wobei T die mittlere Anzahl der terminalen Monomereinheiten, Z die mittlere Anzahl der verzweigten Monomereinheiten und L die mittlere Anzahl der linearen Monomereinheiten in den Makromolekülen der jeweiligen Stoffe bedeuten).

Vorzugsweise weist die Komponente B1) ein Zahlenmittel des Molekulargewichtes $M_n$ von 100 bis 15000, vorzugsweise von 200 bis 12000 und insbesondere von 500 bis 10000 g/mol (GPC, Standard PMMA).

Die Glasübergangstemperatur Tg beträgt insbesondere von -80°C bis +140, vorzugsweise von -60 bis 120°C (gemäß DSC, DIN 53765).

Insbesondere beträgt die Viskosität (mPas) bei 23°C (gemäß DIN 53019) von 50 bis 200000, insbesondere von 100 bis 150000 und ganz besonders bevorzugt von 200 bis 100000.

Die Komponente B1) ist vorzugsweise erhältlich durch ein Verfahren, welches mindestens die folgenden Schritte umfasst:

a) Umsetzung mindestens eines organischen Carbonats (A) der allgemeinen Formel $RO[(CO)]_nOR$ mit mindestens einem aliphatischen, aliphatisch/aromatisch oder aromatischen Alkohol (B), welcher mindestens 3 OH-Gruppen aufweist, unter Eliminierung von Alkoholen ROH zu einem oder mehreren Kondensationsprodukten (K), wobei es sich bei Rjeweils unabhängig voreinander um einen geradkettigen oder verzweigten aliphatischen, aromatisch/aliphatisch oder aromatischen Kohlenwasserstoffrest mit 1 bis 20 C-Atomen handelt, und wobei die Reste R auch unter Bildung eines Ringes miteinander verbunden sein können und n eine ganze Zahl zwischen 1 und 5 darstellt, oder

ab) Umsetzung von Phosgen, Diphosgen oder Triphosgen mit o.g. Alkohol (B) unter Chlorwasserstoffeliminierung sowie

b) intermolekulare Umsetzung der Kondensationsprodukte (K) zu einem hochfunktionellen, hoch- oder hyperverzweigten Polycarbonat,

wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Als Ausgangsmaterial kann Phosgen, Diphosgen oder Triphosgen eingesetzt werden, wobei organische Carbonate bevorzugt sind.

Bei den Resten R der als Ausgangsmaterial eingesetzten organischen Carbonate (A) der allgemeinen Formel $RO(CO)_nOR$ handelt es sich jeweils unabhängig voneinander um einen geradkettigen oder verzweigten aliphatischen, aromatisch/aliphatisch oder aromatischen Kohlenwasserstoffrest mit 1 bis 20 C-Atomen handelt. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Insbesondere werden einfache Carbonate der Formel $RO(CO)_nOR$ eingesetzt; n beträgt vorzugsweise 1 bis 3, insbesondere 1.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder

$NO_x$ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische, aromatisch/aliphatische oder aromatische Carbonate wie Ethylencarbonat, 1,2- oder 1,3-Propyl encarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat oder Didodecylcarbonat.

Beispiele für Carbonate, bei denen n größer 1 ist, umfassen Dialkyldicarbonate, wie Di(-t-butyl)dicarbonat oder Dialkyltricarbonate wie Di(-t-butyltricarbonat).

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Die organischen Carbonate werden mit mindestens einem aliphatischen Alkohol (B), welcher mindestens 3 OH-Gruppen aufweist oder Gemischen zweier oder mehrerer verschiedener Alkohole umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl) amin, Pentaerythrit, Diglycerin, Triglycerin, Polyglycerine, Bis(tri-methylolpropan), Tris(hydroxymethyl)isocyanurat, Tris (hydroxyethyl)isocyanurat, Phloroglucinol,, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Bis(tri-methylolpropan) oder Zucker, wie zum Beispiel Glucose, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, 1,1'-Bis(4-Hydroxyphenyl)-3,3-5-trimethylcyclohexan, Resorcin, Hydrochinon, 4,4'-Dihydroxyphenyl, Bis-(4-Bis(hydroxyphenyl)sulfid, Bis(4-Hydroxyphenyl)sulfon, Bis(hydroxymethyl)benzol, Bis(hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen B') zu den mindestens trifunktionellen Alkoholen (B) vom Fachmann je nach den gewünschten Eigenschaften des Polycarbonates festgelegt. Im Regelfalle beträgt die Menge des oder der Alkohole (B') 0 bis 50 mol-% bezüglich der Gesamtmenge aller Alkohole (B) und (B') zusammen. Bevorzugt beträgt die Menge 0 bis 45 mol-%, besonders bevorzugt 0 bis 35 mol-% und ganz besonders bevorzugt 0 bis 30 mol-%.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hochfunktionellen hochverzweigten Polycarbonat erfolgt unter Eliminierung des monofunktionellen Alkohols oder Phenols aus dem Carbonat-Molekül.

Die nach dem erfindungsgemäßen Verfahren gebildeten hochfunktionellen hochverzweigten Polycarbonate sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end oder seitenständige funktionelle Gruppen auf.

Bei der Herstellung der hochfunktionellen Polycarbonate B1) ist es notwendig, das Verhältnis von den OH-Gruppen enthaltenden Verbindungen zu Phosgen oder Carbonat so einzustellen, dass das resultierende einfachste

Kondensationsprodukt (im weiteren Kondensationsprodukt (K) genannt) im Mittel entweder eine Carbonatgruppe oder Carbamoylgruppe und mehr als eine OH-Gruppe oder eine OH-Gruppe und mehr als eine Carbonatgruppe oder Carbamoylgruppe enthält. Die einfachste Struktur des Kondensationsproduktes (K) aus einem Carbonat (A) und einem Di- oder Polyalkohol (B) ergibt dabei die Anordnung $XY_n$ oder $Y_nX$, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

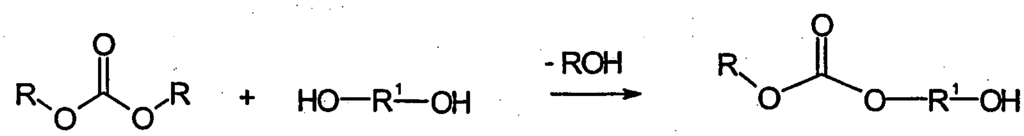


1

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs $XY_2$, veranschaulicht durch die allgemeine Formel 2. Fokale Gruppe ist hier eine Carbonatgruppe.

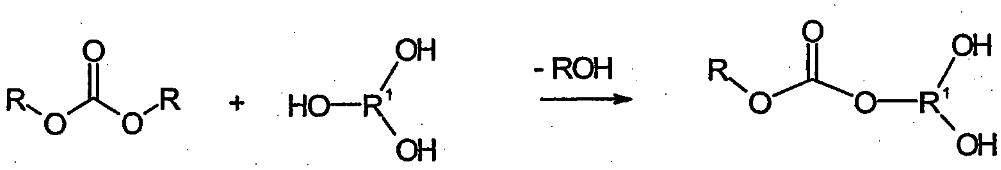


2

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs $XY_3$, veranschaulicht durch die allgemeine Formel 3. Fokale Gruppe ist hier eine Carbonatgruppe.

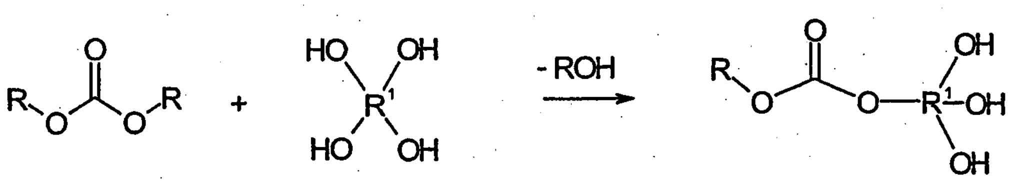


3

In den Formeln 1 bis 3 hat R die eingangs definierte Bedeutung und $R^1$ steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das Umsetzungsverhältnis bei molar 2:1 liegt: Hier resultiert

im Mittel ein Molekül des Typs $X_2Y$, fokale Gruppe ist hier eine OH-Gruppe. In der Formel 4 haben R und $R^1$ die gleiche Bedeutung wie in den Formeln 1 bis 3.

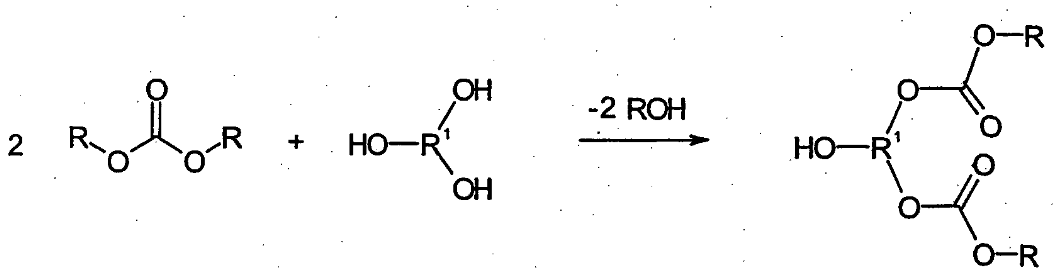


4

Werden zu den Komponenten zusätzlich difunktionelle Verbindungen, z.B. ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs $XY_2$, fokale Gruppe ist eine Carbonatgruppe.

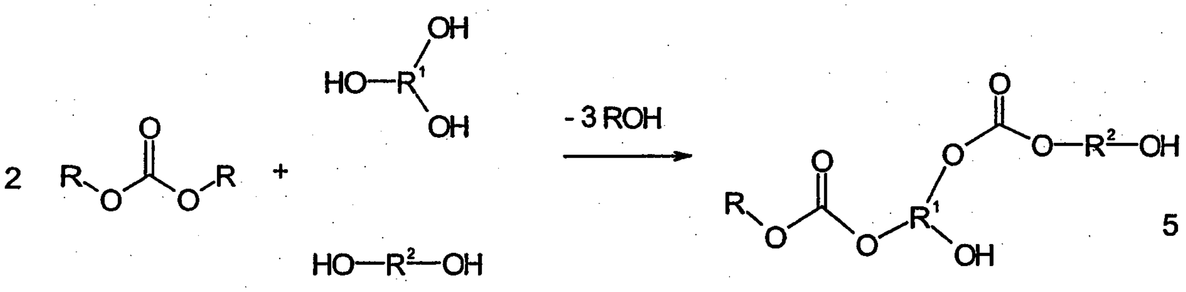


5

In Formel 5 bedeutet $R^2$ einen organischen, bevorzugt aliphatischen Rest, R und $R^1$ sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert. Setzt man die Ausgangsprodukte im Verhältnis 1:1 ein, wie in (II) dargestellt, so erhält man ein Molekül $XY_2$. Setzt man die Ausgangsprodukte im Verhältnis 2:1 ein, wie in (IV) dargestellt, so erhält man ein Molekül $X_2Y$. Bei einem Verhältnis zwischen 1:1 und 2:1 erhält man eine Mischung von Molekülen $XY_2$ und $X_2Y$.

Die beispielhaft in den Formeln 1 - 5 beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenswert, solche Carbonate einzusetzen, welche bei der Umsetzung Alkohole ROH mit einem Siedepunkt von weniger als 140°C freisetzen.

Zur Beschleunigung der Reaktion können auch Katalysatoren oder Katalysatorgemische zugegeben werden. Geeignete Katalysatoren sind Verbindungen, die zum Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

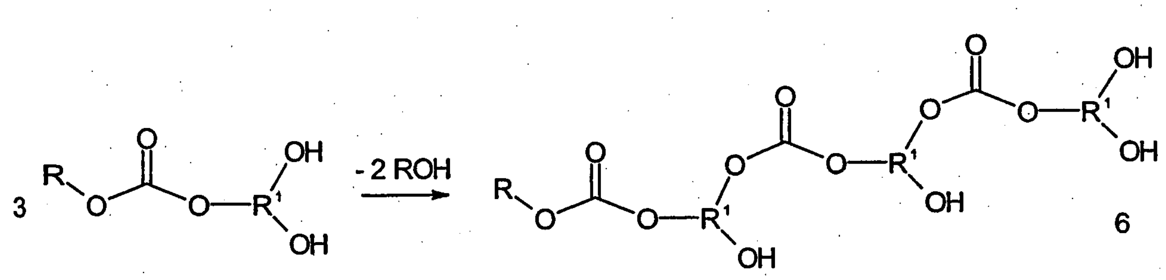


6

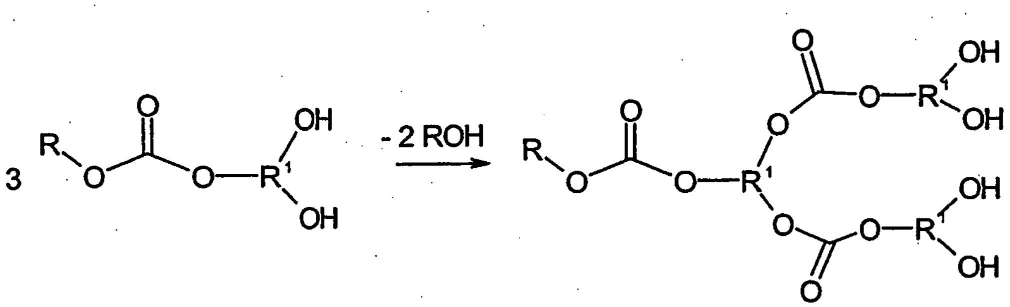


7

In Formel 6 und 7 sind R und $R^1$ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

Weiterhin kann man den Katalysator deaktivieren, bei basischen z.B. durch Zugabe von Lewissäuren oder Protonensäuren.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Produkt gestrippt, das heißt, von niedermolekularen, flüchtigen Verbindungen befreit. Dazu kann nach Erreichen des gewünschten Umsatzgrades der Katalysator optional deaktiviert und die niedermolekularen flüchtigen Bestandteile, z.B. Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

In einer weiteren bevorzugten Ausführungsform können die erfindungsgemäßen Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat-oder Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Silangruppen; Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan, Tris(hydroxyethyl)aminomethan, Ethylen-diamin, Propylendiamin, Hexamethylendiamin oder isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen oder Harnstoffgruppen aufweisende Polycarbonate.

Durch Zugabe von Dicarbonsäuren, Tricarbonsäuren, z.B. Terephthalsäuredimethylester oder Tricarbonsäureester lassen sich Estergruppen erzeugen.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat-Gruppen oder Carbamoylgruppen des Polycarbonates reagieren kann, umsetzt.

Hydroxylgruppen enthaltende hochfunktionelle, hoch oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Ein großer Vorteil des Verfahren liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Als Komponente B2) können die erfindungsgemäßen Formmassen mindestens eines hyperverzweigten Polyesters des Typs $A_xB_y$ enthalten, wobei

x mindestens 1,1 vorzugsweise mindestens 1,3, insbesondere mindestens 2
y mindestens 2,1, vorzugsweise mindestens 2,5, insbesondere mindestens 3

beträgt.

Selbstverständlich können als Einheiten A bzw. B auch Mischungen eingesetzt werden.

Unter einem Polyester des Typs $A_xB_y$ versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hyperverzweigten Polyestern B2) werden im Rahmen dieser Erfindung unvernetzte Makromoleküle mit Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, dass der Verzweigungsgrad 99,9 100% beträgt. Zur Definition des "Degree of Branching" siehe H. Frey et al., Acta Polym. 1997, 48, 30.

Die Komponente B2) weist vorzugsweise ein $M_n$ von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weist B2) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die $T_g$ beträgt vorzugsweise von -50°C bis 140°C und insbesondere von -50 bis 100°C (mittels DSC, nach DIN 53765).

Insbesondere solche Komponenten B2) sind bevorzugt, in denen mindestens eine OH- bzw. COOH-Zahl größer 0, vorzugsweise größer 0,1 und insbesondere größer 0,5 ist.

Insbesondere durch die nachfolgend beschriebenen Verfahren ist die erfindungsgemäße Komponente B2) erhältlich, u.z. indem man

(a) eine oder mehrere Dicarbonsäuren oder eines oder mehrere Derivate derselben mit einem oder mehreren mindestens trifunktionellen Alkoholen
oder

(b) eine oder mehrere Tricarbonsäuren oder höhere Polycarbonsäuren oder eines oder mehrere Derivate derselben mit einem oder mehreren Diolen

in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist die bevorzugte Herstellmethode.

Hochfunktionelle hyperverzweigte Polyester B2) im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-a,w-dicarbonsäure, Dodecan-a,w-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure,
wobei die oben genannten Dicarbonsäuren substituiert sein können mit einem oder mehreren Resten, ausgewählt aus $C_1$-$C_{10}$-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryt und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin gehören zu den nach Variante (a) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form von Derivaten einsetzen.

Unter Derivaten werden bevorzugt verstanden

- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.

Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden

- die betreffenden Anhydride in monomerer oder auch polymerer Form,
- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner Mono-, Di- oder Trivinylester
- sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um Komponente B2) zu erhalten.

Als Diole für Variante (b) der vorliegenden Erfindung verwendet man beispielsweise Ethylenglykol, Propan-1,2-diol; Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H oder Gemische von zwei oder mehr Vertretern der voranstehenden Verbindungen, wobei n eine ganze Zahl ist und n = 4 bis 25 beträgt. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Die Molverhältnis der Moleküle A zu Molekülen B im $A_x$ By-Polyester bei den Varianten (a) und (b) beträgt 4:1 bis 1:4, insbesondere 2:1 bis 1:2.

Die nach Variante (a) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um ein Triol handeln, welches primäre und sekundäre Hydroxylgruppen aufweist, bevorzugtes Beispiel ist Glycerin.

Bei der Durchführung der erfindungsgemäßen Umsetzung nach Variante (a) arbeitet man bevorzugt in Abwesenheit von Diolen und monofunktionellen Alkoholen.

Bei der Durchführung der erfindungsgemäßen Umsetzung nach Variante (b) arbeitet man bevorzugt in Abwesenheit von mono- oder Dicarbonsäuren.

Das erfindungsgemäße Verfahren wird bevorzugt in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

Zur Durchführung des erfindungsgemäß bevorzugten Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, $MgSO_4$ und $Na_2SO_4$. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Alumiumverbindungen der allgemeinen Formel $Al(OR)_3$ und Titanate der allgemeinen Formel $Ti(OR)_4$ als saure anorganische Katalysatoren einsetzbar, wobei die Reste R jeweils gleich oder verschieden sein können und unabhängig voneinander gewählt sind aus

$C_1$-$C_{10}$-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

$C_3$-$C_{12}$-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in $Al(OR)_3$ bzw. $Ti(OR)_4$ jeweils gleich und gewählt aus Isopropyl oder 2-Ethylhexyl.

Bevorzugte saure metallorganische Katalysatoren sind beispielsweise gewählt aus Dialkylzinnoxiden $R_2SnO$, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man

erfindungsgemäß 0,1 bis 10 Gew.%, bevorzugt 0,2 bis 2 Gew.-% Katalysator ein.

Das erfindungsgemäße Verfahren wird unter Inertgasatmosphäre durchgeführt, das heißt beispielsweise unter Kohlendioxid, Stickstoff oder Edelgas, unter denen insbesondere Argon zu nennen ist.

Das erfindungsgemäße Verfahren wird bei Temperaturen von 60 bis 200°C durchgeführt. Vorzugsweise arbeitet man bei Temperaturen von 130 bis 180; insbesondere bis 150°C oder darunter. Besonders bevorzugt sind maximale Temperaturen bis 145°C, ganz besonders bevorzugt bis 135°C.

Die Druckbedingungen des erfindungsgemäßen Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des erfindungsgemäßen Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die hochfunktionellen hyperverzweigten Polyester leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Weiterhin kann die Komponente B2) in Gegenwart von Enzymen oder Zersetzungsprodukten von Enzymen hergestellt werden (gemäß DE-A 101 63163). Es gehören die erfindungsgemäß umgesetzten Dicarbonsäuren nicht zu den sauren organischen Katalysatoren im Sinne der vorliegenden Erfindung.

Bevorzugt ist die Verwendung von Lipasen oder Esterasen. Gut geeignete Lipasen und Esterasen sind Candida cylindracea, Candida lipolytica, Candida rugosa, Candida antarctica, Candida utilis, Chromobacterium viscosum, Geolrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. Immobilisierte Enzyme sind kommerziell erhältlich, beispielsweise bei Novozymes Biotech Inc., Dänemark.

Die Menge an immobilisiertem eingesetztem Enzym beträgt 0,1 bis 20 Gew.-%, insbesondere 10 bis 15 Gew. %, bezogen auf die Masse der insgesamt eingesetzten umzusetzenden Ausgangsmaterialien.

Das erfindungsgemäße Verfahren wird bei Temperaturen über 60°C durchgeführt. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Das erfindungsgemäße Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 5 Gew.-Teile, bezogen auf die Masse der eingesetzten umzusetzenden Ausgangsmaterialien, bevorzugt mindestens 50 Gew.-Teile und besonders bevorzugt mindestens 100 Gew.-Teile. Mengen von über 10 000 Gew.-Telle Lösemittel sind nicht erwünscht, weil bei deutlich niedrigeren Konzentrationen die Reaktionsgeschwindigkeit deutlich nachlässt, was zu unwirtschaftlichen langen Umsetzungsdauem führt.

Das erfindungsgemäße Verfahren wird bei Drücken oberhalb von 500 mbar durchgeführt. Bevorzugt ist die Umsetzung bei Atmosphärendruck oder leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des erfindungsgemäßen Verfahrens beträgt üblicherweise 4 Stunden bis 6 Tage, bevorzugt 5 Stunden bis 5 Tage und besonders bevorzugt 8 Stunden bis 4 Tage.

Nach beendeter Reaktion lassen sich die hochfunktionellen hyperverzweigten Polyester isolieren, beispielsweise durch Abfiltrieren des Enzyms und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Die nach dem erfindungsgemäßen Verfahren erhältlichen hochfunktionellen, hyperverzweigten Polyester,

zeichnen sich durch besonders geringe Anteile an Verfärbungen und Verharzungen aus. Zur Definition von hyperverzweigten Polymeren siehe auch: P.J. Flory, J. Am. Chem. Soc. 1952, 74, 2718 und A. Sunder et al., Chem. Eur. J. 2000, 6, No.1, 1-8. Unter "hochfunktionell hyperverzweigt" wird im Zusammenhang mit der vorliegenden Erfindung jedoch verstanden, dass der Verzweigungsgrad (Degree of branching), das heißt die mittlere Anzahl von dendritischen Verknüpfungen plus die mittlere Anzahl von Endgruppen pro Molekül 10 - 99,9 %, bevorzugt 20 - 99 %, besonders bevorzugt 30 - 90 % beträgt (siehe dazu H. Frey et al. Acta Polym. 1997, 48, 30).

Die erfindungsgemäßen Polyester haben ein Molekulargewicht $M_w$ von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester sind carboxyterminiert, carboxy- und Hydroxylgruppen-terminiert und vorzugsweise Hydroxylgruppen-terminiert.

Die Verhältnisse der Komponenten B1) zu B2) betragen vorzugsweise von 1 : 20 bis 20 : 1, insbesondere von 1 : 15 bis 15 : 1 und ganz besonders von 1 : 5 bis 5 : 1, wenn diese in Mischung eingesetzt werden.

Bei den eingesetzten hyperverzweigten Polycarbonaten B1) / Polyestern B2) handelt es sich um Partikel mit einer Größe von 20 - 500 nm. Diese Nanopartikel liegen im Polymerblend fein verteilt vor, die Größe der Partikel im Compound beträgt von 20 bis 500 nm, vorzugsweise 50 - 300 nm.
Derartige Compounds sind im Handel als Ultradur ® high speed erhältlich.

Als Komponente (C) enthalten die erfindungsgemäßen thermoplastischen Formmassen 1 bis 40, vorzugsweise 1 bis 20 Gew.% eines schlagzähmodifizierenden Polymeren (oft auch als kautschukelastisches Polymerisat oder Elastomer bezeichnet).

Bevorzugte kautschukelastische Polymerisate sind Polymerisate auf Basis von Olefinen, die aus folgenden Komponenten aufgebaut sind:

$C_1$) 40 - 100 Gew.% vorzugsweise 55 bis 79,5 Gew.% mindestens eines $\alpha$-Olefins mit 2 bis 8 C-Atomen,
$C_2$) 0 - 90 Gew.% eines Diens,
$C_3$) 0 - 45 Gew.-% bevorzugt 20 bis 40 Gew.% eines $C_1$-$C_{12}$-Alkylesters der Acrylsäure oder Methacrylsäure oder Mischungen derartiger Ester,
$C_4$) 0 - 40 Gew.-% bevorzugt 0,5 bis 20 Gew.-% einer ethylenisch ungesättigten Mono- oder Dicarbonsäure oder einem funktionellen Derivat einer solchen Säure,
$C_5$) 0 - 40 Gew.-% eines Epoxygruppen enthaltenden Monomeren,
$C_6$) 0 - 5 Gew.-% sonstiger radikalisch polymerisierbaren Monomerer,

mit der Maßgabe, dass die Komponente (C) kein Olefinhomopolymerisat ist, denn hiermit, z.B. mit Polyethylen, erzielt man die vorteilhaften Wirkungen nicht in gleichem Maße.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw..EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere $C_2$) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Di-. methylhexa-I,,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbomen, 5-Butyliden-2-norbornen, 2-Methallyl-5-norbornen, 2-Isopropenyl-5-norbomen und Tricyclodiene wie 3-Methyl-tricyclo(5.2.1.0.2.6)-3,8-decadien oder deren Mischungen genannt. Bevorzugt werden Hexa-1,5-dien, 5-Ethyliden-Norbornen und Dicyclopentadien. Der Diengehalt der EPDM-Kau2chuke beträgt vorzugsweise 0,5 bis 50, insbesondere 2 bis 20 und besonders bevorzugt 3 bis 15 Gew.-$^0$/o, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Insbesondere bevorzugte Komponenten C) sind beispielsweise MBS-Kautschuke aufgebaut aus:

65 bis 99 Gew.-% eines Kerns aus

$C_2$) 90 bis 100 Gew.-% eines Diens, 0 bis 10 Gew.-% weiterer vernetzbarer Monomerer sowie 1 bis 35 Gew.-% einer Schale aus

$C_7$) 1 bis 30 Gew.-% Styrol oder ungesättigten Styrolen oder deren Mischungen und

$C_8$) 70 bis 100 Gew.-% mindestens eines ungesättigten Nitrils.

Geeignete Monomere $C_7$) sind Styrole oder substituierte Styrole der allgemeinen Formel

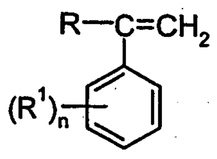

I

worin R einen $C_1$- bis $C_8$-Alkylrest, bevorzugt Methyl oder Ethyl, oder Wasserstoff bedeutet und $R^1$ einen $C_1$- bis $C_8$Alkylrest, bevorzugt Methyl oder Ethyl, darstellt und n den Wert 1, 2 oder 3 hat oder deren Mischungen.

Eine weitere Gruppe bevorzugter Olefinpolymerisate sind Copolymere von $\alpha$-Olefinen mit 2 - 8 C-Atomen, insbesondere des Ethylens, mit $C_1$-$C_{18}$-Alkylestem der Acrylsäure und/oder Methacrylsäure.

Grundsätzlich eignen sich alle primären, sekundären und tertiären $C_1$-$C_{18}$-Alkylester der Acrylsäure oder Methacrylsäure, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester $C_3$) an den Olefinpolymerisaten beträgt 0 - 60, vorzugsweise 10 - 50 und insbesondere 30 - 45 Gew.-%.

Anstelle der Ester $C_3$) oder zusätzlich zu diesen können in den Olefinpolymerisaten auch säurefunktionelle und/oder latent säurefunktionelle Monomere ethylenisch ungesättigter Mono- oder Dicarbonsäuren $C_4$) oder Epoxygruppen aufweisende Monomere $C_5$) enthalten sein.

Als Beispiele für Monomere $C_4$ seien Acrylsäure, Methacrylsäure, tertiäre Alkylester dieser Säuren, insbesondere tert.-Butylacrylat und.Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I - IV zum Monomerengemisch in die Olefinpolymerisate eingebaut.

$$R_1C(COOR^2)=C(COOR_3)R_4 \qquad (I)$$

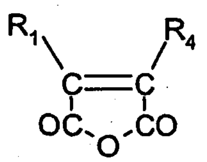

(II)

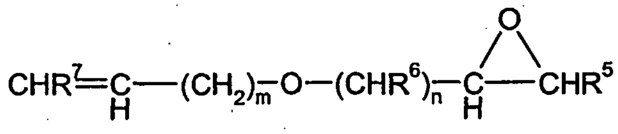 (III)

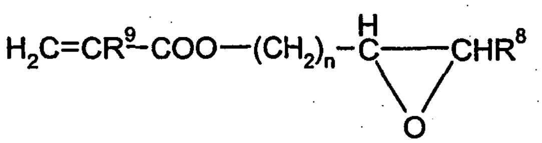 (IV)

wobei die Reste $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für $R^1$ - $R^7$ ist Wasserstoff, für m der Wert 0 oder 1 und für n der Wert 1. Die entsprechenden Verbindungen sind Maleinsäure, Fumarsäure, Maleinsäureanhydrid, $C_4$) bzw. Alkenylglycidylether oder Vinylglycidylether $C_5$).

Bevorzugte Verbindungen der Formeln I, II, III und IV sind Maleinsäure und Maleinsäureanhydrid als Komponente $C_4$) und Epoxygruppen-enthaltende Ester der Acrylsäure und/oder Methacrylsäure, wobei Glycidylacrylat und Glycidylmethacrylat (als Komponente $C_5$) besonders bevorzugt werden.

Der Anteil der Komponenten $C_4$) bzw. $C_5$) beträgt jeweils 0,07 bis 40 Gew.%, insbesondere 0,1 bis 20 und besonders bevorzugt 0,15 bis 15 Gew.%, bezogen auf das Gesamtgewicht der Olefinpolymerisate.

Besonders bevorzugt sind Olefinpolymerisate aus

| | |
|---|---|
| 50 bis 98,9 | insbesondere 55 bis 65 Gew.-% Ethylen, |
| 0,1 bis 20, | insbesondere 0,15 bis 10 Gew.-% Glycidylacrylat und/oder Glycidylmethacrylat, Acrylsäure und/oder Maleinsäureanhydrid, |
| 1 bis 45, | insbesondere 25 bis 40 Gew.-% n-Butylacrylat und/oder 2-Ethylhexylacrylat, sowie |
| 0 bis 10, | insbesondere 0,1 bis 3 Gew.-% Maleinsäureanhydrid oder Fumarsäure oder deren Mischungen. |

Weitere bevorzugte Ester der Acryl- und/oder Methacrylsäure sind die Methyl-, Ethyl-, Propyl- und i- bzw. t-Butylester.

Als sonstige Monomere $C_6$) kommen z.B. Vinylester und Vinylether in Betracht.

Bei der Verwendung solcher Olefinpolymerisate beträgt deren Anteil bevorzugt 0 bis 20, insbesondere 4 bis 18 und ganz besonders 5 bis 15 Gew.-%, bezogen auf das Gesamtgewicht der Komponenten (A) bis (D).

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Weiterhin bevorzugt sind Acrylat Kautschuke C) aufgebaut aus:

a) 70 bis 90 Gew.-% und vorzugsweise 75 bis 85 Gew.-% vernetzten elastomeren Kern, der sich zusammensetzt aus:

1) 20 bis 90 Gew.-% eines Kerns, der aus einem Copolymer (1) eines n-Alkylacrylats, dessen Alkylgruppe 5 bis 12 Kohlenstoffatome und vorzugsweise 5 bis 8 Kohlenstoffatome aufweist, oder eines Gemisches von Alkylacrylaten, wobei die Anzahl der Kohlenstoffatome geradkettigen oder verzweigten Alkylgruppen im Bereich von 2 bis 12 und vorzugsweise 4 bis 8 liegt; eines polyfunktionellen Vernetzungsmilltels, wobei dieses Molekül ungesättigte Gruppen und darunter mindestens eine Gruppe vom Vinyltyp $CH_2$=C< aufweist, und gegebenenfalls eines polyfunktionellen Pfropfungsmittels besteht wobei dieses Molekül ungesättigte Gruppen und darunter mindestens eine Gruppe vom Allyltyp $CH_2$=CH-$CH_2$- aufweist, wobei der Kern eine molaren Menge des Vernetzungsmittels und gegebenenfalls des Pfropfungsmittels von 0,05 bis 5 % und vorzugsweise in einer Menge von 0,5 bis 1,5 Gew. % enthält,

2) 80 bis 10 Gew-% einer Schale, die aus einem Copolymer (II) eines n-Alkylacrylats, dessen Alkylgruppe 4

bis 12 Kohlenstoffatome und vorzugsweise 4 bis 8 Kohlenstoffatome aufweist, oder eines Gemisches von Alkylacrylaten gemäß der unter 1) angegebenen Definition und eines polyfunktionellen Propfungsmittels besteht, wobei dieses Molekül ungesättigte Gruppen und darunter mindestens eine Gruppe vom Allyltyp $CH_2=CH-CH_2$-aufweist, wobei die Schale das Pfropfungsmittel in einer molaren Menge von 0,05 bis 2,5 % und vorzugsweise in einer Menge von 0,5 bis 1,5 Gew.-% enthält, und

b) 30 bis 10 Gew.-% und vorzugsweise 25 bis 15 Gew.-% einer auf den Kein gepfropften Schale, die aus einem Alkylmethacrylatpolymer, dessen Alkylgruppe 1 bis 4 Kohlenstoffatome aufweist, oder aus einem statistischen Copolymer eines Alkylmethacrylats, dessen Alkylgnppe 1 bis 4 Kohlenstoffatome aufweist, und eines Alkylacrylats besteht. dessen Alkylgruppe 1 bis 8 Kohlenstoffatome aufweist,

wobei das Alkylacrylat in einer molaren Menge von 5 bis 40 % und vorzugsweise im Bereich von 10 bis 20 % enthalten ist.

Von den n-Alkylacrylaten, die gemäß der vorliegenden Erfindung zur Bildung des Copolymers (1) verwendbar sind, können zur Erläuterung das n-Pentylacrylat n-Hexylacrylat, n-Heptylacrylat und insbesondere das n-Octylacrylat verwendet werden.

Beispiele für n-Alkylacrylate, die gemäß der Erfindung zur Bildung des Copolymers (II) verwendbar sind, sind etwa n-Butylacrylat, n-Pentylacrylat, n-Hexylacrylat, n-Heptylacrylat und insbesondere das n-Octylacrylat.

Die zur Bildung der Copolymere (I) und/oder (II) verwendbaren n-Alkylacrylate können gleich oder verschieden sein.

Zur Erläuterung dar geradkettigen oder verzweigten Alkylacrylate, die gemäß der Erfindung zur Bitdung der Gemische von Alkylacrylaten in den Copolymeren (I) und/oder (II) verwendbar sind, können Ethylacrylat, n-Propylacrylat, n-Butylacrylat, Amylacrylat 2-Methylbubylacylet, 2-Ethylhexylacrytat, n-Hexylacrylat, n-Octylacrylat, n-Decylacrylat, n-Dodecylacrylat und 3,5,5-Trimethylhexylacrylat angegeben werden.

Falls zur Bildung der Copolymere (I) und/oder (II) ein Gemisch von Alkylacrylaten eingesetzt wird, sollte das n Alkylacrylat in einem Gewichtsanteil von mindestens 10 Gew.-% des Gemisches von Alkylacrylaten verwendet werden, wobei diese Menge vorzugsweise im Bereich von 20 bis 80 % liegt.

Wie oben angegeben wurde, können zur Herstellung der Copolymere (I) und/oder (II) identische oder unterschiedliche Gemische von Alkylacrylaten verwendet wenden.

Gemäß der vorliegenden Erfindung werden bevorzugt n-Alkylacrylate und insbesondere das n-Octylacrylat zur Herstellung der Copolymere (I) und (II) verwendet.

Wenn zur Bildung der Copolymere (I) und/oder (II) ein Gemisch von Alkylacrylaten verwendet wird, werden vorzugsweise 20 bis 80 Gew.-% n-Octylacrylat und vorzugsweise 80 bis 20 Gew.-% n-Butylacrylat eingesetzt.

Beispiele für Alkylmethacrylate, die zur Bildung der auf den vernetzten elastomeren Kern gepfropften Schale gemäß der vorliegende Erfindung zum Einsatz kommen können, sind beispielsweise Ethylmethacrylat, n-Propylmethacrylat, Isopropylmethacrylat; n-Butylmethacrylat, Isobutylacrylat und besonders das Methylmethacrylat.

Das zur Bildung des Copolymers (I) verwendete Vernetzungsmittel kann gemäß der vorliegenden Erfindung insbesondere unter den Derivaten ausgewählt werden, die mindestens zwei Doppelbindungen vom Vinyltyp oder eine oder mehrere Doppelbindungen vom Vinyltyp und mindestens eine Doppelbindung vom Allyltyp aufweisen. Vorzugsweise werden Verbindungen eingesetzt, die in ihren Molekülen hauptsächlich Doppelbindungen vom Vinyltyp enthalten.

Zur Erläuterung für derartige Vernetzungsmittel können die Divinylbenzole, (Meth)acrylate von Polyalkoholen, wie beispielsweise Trimethylolpropantriacrylat, Trimethylolpropantrimethacrylat, Allylacrylat, Allylmethacrylat, Diacrylate oder Methacrylate von Alkylenglykolen mit 2 bis 10 Kohlenstoffatomen in der Alkylenkette und insbesondere Ethylenglykoldiacrylat, Ethylenglykoldimethacrylat, Butan-1,4-dioldiacrylat, Butan-1,4-dimethacrylat, Hexen-1,6-dioldiacrylat, Hexan-1,6-dimethacrylat, das Diacrylat oder Dimethacrylat von Polyoxyalkylenglykol der folgenden Formel:

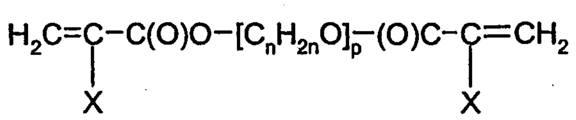

worin X Wasserstoff oder Methyl bedeutet, n eine ganze Zahl von 2 bis 4 und p eine ganze Zahl von 2 bis 20 bedeutet, und insbesondere das Diacrylat oder Dimethacrylat vor Polyoxyethylenglykol angegeben werden, worin die Polyoxyethylengruppe eine Molmasse von etwa 400 aufweist (oben angegebene Formel mit n = 2 und p = 9).

Das zur Herstellung des Copolymers (II) verwendete Pfropfungsmittel kann gemäß der vorliegenden Erfindung insbesondere unter den Derivaten ausgewählt werden, die mindestens zwei Doppelbindungen vom Allyltyp oder eine oder mehrere Doppelbindungen vom Allyltyp und mindestens eine Doppelbindung vom Vinyltyp enthalten.

Es werden vorzugsweise Verbindungen verwendet, die in ihren Molekülen hauptsächlich Doppelbindungen vom Allyltyp enthalten.

Als Beispiele für solche Pfropfungsmittel kommen beispielsweise Diallylmaleat, Diallylitaconat, Allylacrylat, Allylmethacrylat, Triallylcyanurat, Triallylisocyanurat, Diallylterephthalat und Triallyltrimesat in Betracht.

Der bevorzugte Mengenanteil des Schlagzähmodifikators, der in das thermoplastische Polymer eingebracht wird, liegt im Bereich von 1 bis 30 Gew.-% und vorzugsweise 5 bis 10 Gew.-% auf 100 Gew.-% des verwendeten thermoplastischen Polymers.

Um die Molmasse des Schlagzähmodifikators zu beurteilen, kann eine Viskosität im geschmolzenen Zustand definiert werden, die sich in gleichem Maße verändert. Die Viskosität in geschmolzenem Zustand kann in einem ziemlich großen Bereich liegen, mit der Maßgabe, dass eine gute Dispersion des Schlagzähmodifikators bei den Arbeitsgängen der Verwendung der Harzzusammensetzung mit dem Modifikator gewährleistet ist. Als repräsentative Größe für diese Viskosität im geschmolzenen Zustand ist der Wert des Widerstandsmoments eines Brabender-Rheometers geeignet, das 50 g Schlagzähmodifikator enthält und bei einer Temperatur von 200°C mit einer Rotationsgeschwindigkeit der Rotoren von 40 U/min betrieben wird, wobei die Ermittlung des Drehmoments nach 20 min bei 200°C durchgeführt wird. Geeignete Werte für die Viskosität im geschmolzenen Zustand des Schlagzähmodifikators entsprechen Werten des oben genannten Drehmoments im Bereich von 600 bis 4000 mg. Für Harzzusammensetzungen, in denen das thermoplastische Polymer ein Polymer mit mindestens 80 Gew.-% polymerisiertem Vinylchlorid ist, entsprechen die bevorzugten Werte für die Viskosität des Schlagzähmodifikators im geschmolzenen Zustand Drehmomentwerten im Bereich von 800 bis 3000 mg und insbesondere im Bereich von 1000 bis 2500 mg.

Verfahren zur Herstellung derartiger Komponenten C) sind aus der EP-A 776 915 bekannt.

Als Komponente D) können die erfindungsgemäßen Formmassen 0 bis 60, insbesondere bis zu 50 Gew.-% weiterer Zusatzstoffe und Verarbeitungshilfsmittel enthalten, welche verschieden von B) und C) sind.

Als Komponente D) können die erfindungsgemäßen Formmassen 0 bis 5, vorzugsweise 0,05 bis 3 und insbesondere 0,1 bis 2 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Amiriohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als faser- oder teilchenförmige Füllstoffe D) seien Kohlenstofffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 % eingesetzt werden.

Als bevorzugte faserförmige Füllstoffe seien Kohlenstoffasern; Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X\text{-}(CH_2)_n)_k\text{-}Si\text{-}(O\text{-}C_mH_{2m+1})_{4-k}$$

in der die Substituenten folgende Bedeutung haben:

X $NH_2$-,

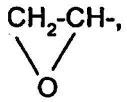 HO-,

n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein UD-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als Komponente D) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylenhexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 $\mu$m, insbesondere von 0,1 bis 5 $\mu$m auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer weiteren bevorzugten Arbeitsweise können die Komponenten B) sowie gegebenenfalls C)/D) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Fließfähigkeit bei

gleichzeitig guter Mechanik aus.

Insbesondere ist die Verarbeitung der einzelnen Komponenten (ohne Verklumpung oder Verbackung) problemlos und in kurzen Zykluszeiten möglich, so dass insbesondere dünnwändige Bauteile als Anwendung in Frage kommen.

Der Einsatz für einen fließverbesserten Polyester ist in nahezu sämtlichen Spritzgussanwendungen denkbar. Die Fließverbesserung ermöglicht eine niedrigere Schmelzetemperatur und kann somit zu einer deutlichen Absenkung der gesamten Zykluszeit des Spritzgussprozesses führen (Absenkung der Herstellkosten eines Spritzgussteiles!). Des weiteren sind niedrigere Einspritzdrücke während der Verarbeitung notwendig, so dass eine geringere Gesamtschließkraft am Spritzgusswerkzeug benötigt wird (niedrigere Investitionskosten bei der Spritzgussmaschine).

Neben den Verbesserungen des Spritzgussprozesses kann die Absenkung der Schmelzeviskosität zu deutlichen Vorteilen bei der eigentlichen Bauteilgestaltung führen. So können dünnwandige Anwendungen, die z.B. bisher mit gefüllten Polyester-Typen nicht realisierbar waren, über Spritzguss hergestellt werden. Analog hierzu ist bei bestehenden Applikationen durch den Einsatz verstärkter aber leichter fließender Polyester-Typen eine Reduzierung der Wandstärken und somit eine Reduzierung der Teilegewichte denkbar.

Diese eignen sich zur Herstellung von Fasern, Folien und Formkörpern jeglicher Art, insbesondere für Anwendungen als Hecker, Schalter, Gehäuseteile, Gehäusedeckel, Scheinwerferhintergrund (Bezel), Brausenkopf, Armaturen, Bügeleisen, Drehschalter, Herdknöpfe, Friteusendeckel, Türgriffe, (Rück-)spiegelgehäuse, (Heck-)scheibenwischer, Lichtwellenleiterummantelungen.

Im E/E-Bereich können mit dem fließverbesserten Polyestern Stecker, Steckerteile, Steckverbinder, Kabelbaumkomponenten, Schaltungsträger, Schaltungsträgerkomponenten, dreidimensional spritzgegossene Schaltungsträger, elektrische Verbindungselemente, mechatronische Komponenten oder optoelektronische Bauelemente hergestellt werden.

Im Auto-Innenraum ist eine Verwendung für Armaturentafeln, Lenkstockschalter, Sitzteile, Kopfstützen, Mittelkonsolen, Getriebe-Komponenten und Tür-module, im Auto-Außenraum für Türgriffe, Frontscheinwerferkomponenten, Außenspiegelkomponenten, Scheibenwischerkomponenten, Scheibenwischerschutzgehäuse, Ziergitter, Dachreling, Schiebedachrahmen sowie Karosserieaußenteile möglich.

Für den Küchen- und Haushaltsbereich ist der Einsatz des fließverbesserten Polyester zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte möglich.

Im Bereich der Medizintechnik können Inhalatorengehäuse, und deren Komponenten durch fließverbessertes Polyester einfacher realisiert werden.

Durch Transmissionselektronenmikroskopie wurde die Morphologie ausgewählter Compounds untersucht. Es zeigte sich eine gute Dispergierung der Partikel im Blend. Es wurden Partikelgrößen von 20 bis 500 nm beobachtet.

Beispiele

Komponente A/1:

Polybutylenterephthalat mit einer Viskositätszahl VZ von 130 ml/g und einem Carboxylendgruppengehalt von 34 mval/kg (Ultradur® B 4520 der BASF AG) (VZ gemessen in 0,5 gew.-%iger Lösung aus Phenol/o-Dichlorbenzol), 1: 1-Mischung bei 25°C, enthaltend 0,65 Gew.-% Pentaerythrittetrastearat (Komponente D1 bezogen auf 100 Gew.-% A)

Herstellvorschrift für Polycarbonate B1

Allgemeine Arbeitsvorschrift:

In einem Dreihalskolben, ausgestattet mir Rührer, Rückflusskühler und Innenthermometer wurde gemäß Tabelle 1 der mehrfunktionelle Alkohol äquimolar mit Diethylcarbonat gemischt und 250 ppm Katalysator (bezogen auf die Menge an Alkohol) zugegeben. Die Mischung wurde anschließend unter Rühren auf 100°C, bei dem mit * gekennzeichneten Versuch auf 140°C erwärmt, und 2 h bei dieser Temperatur gerührt. Mit fortschreitender Reaktionsdauer reduzierte sich dabei die Temperatur des Reaktionsgemisches bedingt durch die einsetzende Siedekühlung des freigesetzten Monoalkohols. Nun wurde der Rückflusskühler gegen einen absteigenden Kühler getauscht, Ethanol abdestilliert und die Temperatur des Reaktionsgemisches langsam bis auf 160°C erhöht.

Das abdestillierte Ethanol wurde in einem gekühlten Rundkolben gesammelt, ausgewogen und der Umsatz so gegenüber dem theoretisch möglichen Vollumsatz prozentual ermittelt (siehe Tabelle 1).

Die Reaktionsprodukte wurden anschließend per Gelpermeationschromatographie analysiert, Laufmittel war Dimethylacetamid, als Standard wurde Polymethylmethacrylat (PMMA) verwendet.

Tabelle 1

| Komponente | Alkohol | Katalysator | Destillat, Ethanolmenge bez. auf Vollumsatz Mol.-% | Molekulargewicht Produkt (g/mol) Mw Mn | Visk. 23°C Produkt (mPas) | OH-Zahl Produkt (mg KOH/g) nach DIN 53240, Teil 2 |
|---|---|---|---|---|---|---|
| B1/1 | Glyc x EO 1:5 | $K_2CO_3$ | 90% | 8230 2898 | - | - |
| B1/2 | TMP x EO 1:3 | $K_2CO_3$ | 90% | 5907 2154 | 1810 | 300 |
| B1/3 | TMP/PO 1:1,2 | $K_2CO_3$ | 70% | 2136 1446 | 7200 | 461 |
| TMP = Trimethylolpropan<br>Glyc = Glycerin<br>EO = Ethylenoxid<br>PO = Propylenoxid | | | | | | |

Komponente B2

Tabelle 2

| | Monomere | Mn (g/mol) | Mw (g/mol) | OH-Zahl (mg KOH/g) | Säure-Zahl (mg KOH/g) |
|---|---|---|---|---|---|
| B 2 | Terephthalsäure und Glycerin | 900 | 2390 | 416 | 0 |

Herstellung B2

1589 g (8.19 mol) Terephtalsäuredimethylester und 628 g (6.83 mol) Glycerin wurden in einem 5-I-Glaskolben vorgelegt, der mit Rührer, Innenthermometer, Öaseinleitungsrohr, Rückflusskühler und Vakuumanschluss mit Kühlfalle ausgerüstet war. Man gab 4.4 g Di-n-Butylzinnoxid zu, kommerziell erhältlich als Fascat® 4201, und erhitzte mit Hilfe eines Ölbads auf eine Innentemperatur von 140°C. Man legte einen verminderten Druck von 50 mbar an, um bei der Reaktion gebildetes Wasser abzutrennen. Die Reaktionsmischung wurde 34 Stunden bei der genannten Temperatur und den genannten Druck gehalten. Anschließend wurde auf Zimmertemperatur abgekühlt, man erhielt 1750 g hyperverzweigten Polyester als klare, sehr viskose Flüssigkeit. Die analytischen Daten sind in obiger Tabelle 2 zusammengefasst.

Komponente C

C/1) Ein Copolymerisat aus

67 Gew.-% Ethylen
25 Gew.-% Methylmethacrylat
8 Gew.-% Glycidylmethacrylat
(Lotader® AX 8900 der Firma Elf-Atochem)

C/2) Ein Acrylat-Kautschuk mit einem vernetzten n-Butylacrylatkern (Durastrength® 400 der Firma Atofina)

C/3) Ein Kern-Schale Polymer aus

70 Gew.-% Polybutadien als Kern
und als Schale
22,5 Gew.-% Styrol und
7,5 Gew.-% Acrylnitril
(Blendex® 338 der Firma General Electric)

C/4) Ein MBS Kautschuk aus

82,6 Gew.-% Polybutadien als Kern
und als Schale
15,1 Gew.-% Methylmethacrylat
2,3 Gew.-% Acrylsäure/n-Butylacrylat
(Paraloid® 6600 der Firma Rohm & Haas)

Herstellung der Formmassen

Die Komponenten A) bis C) wurden auf einem Zweischneckenextruder bei 250 bis 260°C abgemischt und in ein Wasserbad extrudiert. Nach Granulierung und Trocknung wurden auf einer Spritzgussmaschine Prüfkörper gespritzt und geprüft.

Der MVR wurde gemäß ISO 11 33 bestimmt, der E-modul gemäß ISO 527-2, die Charpy-Schlagzähigkeit gemäß ISO 179-2/1eU, die VZ gemäß DIN 53728 bzw.

ISO 1628.

Die erfindungsgemäßen Zusammensetzungen und die Ergebnisse der Messungen sind den Tabellen zu entnehmen.

Tabelle 3

| Vergleichstabelle (ohne Komponente B) | | | | | | | | |
|---|---|---|---|---|---|---|---|---|
| Komponente | 1V | 2V | 3V | 4V | 5V | 6V | 7V | 8V |
| A/1 | 95 | 90 | 95 | 90 | 95 | 90 | 95 | 90 |
| C/1 | 5 | 10 | - | - | - | - | - | - |
| C/2 | - | - | 5 | 10 | - | - | - | - |
| C/3 | - | - | - | - | 5 | 10 | - | - |
| C/4 | - | - | - | - | - | - | 5 | 10 |
| VZ [ml/g] | 123,0 | 131,4 | 118,1 | 113,9 | 117,0 | 112,5 | 118,9 | 117,5 |
| MVR [$cm^3$/10 min] | 39,7 | 21,2 | 47 | 36 | 41,4 | 28,2 | 42,5 | 23,5 |
| Fließspirale [cm] | 33,8 | 31,6 | 35,2 | 33,3 | 35,2 | 33,8 | 35,3 | 33,7 |
| E-Modul [Mpa] | 2390 | 2096 | 2443 | 2261 | 2406 | 2214 | 2328 | 2069 |
| Streckspannung [Mpa] | 52,50 | 46,13 | 53,69 | 49,65 | 53,04 | 48,67 | 51,12 | 44,59 |
| Bruchspannung [%] | 22,77 | 23,42 | 21,91 | 24,88 | 15,17 | 19,60 | 14,60 | 20,76 |
| Streckdehnung [%] | 7,0 | 6,1 | 3,9 | 4,0 | 3,7 | 3,8 | 3,8 | 3,9 |

Tabelle 4

| Vergleichstabelle (ohne Komponente B) | | | | | | | | |
|---|---|---|---|---|---|---|---|---|
| | 1V | 2V | 3V | 4V | 5V | 6V | 7V | 8V |
| A/1 | 95 | 90 | 95 | 90 | 95 | 90 | 95 | 90 |
| C/1 | 5 | 10 | - | - | - | - | - | - |

(fortgesetzt)

| Vergleichstabelle (ohne Komponente B) | | | | | | | | |
|---|---|---|---|---|---|---|---|---|
| | 1V | 2V | 3V | 4V | 5V | 6V | 7V | 8V |
| C/2 | - | - | 5 | 10 | - | - | - | - |
| C/3 | - | - | - | - | 5 | 10 | - | - |
| C/4 | - | - | - | - | - | - | 5 | 10 |
| VZ [ml/g] | 123,0 | 131,4 | 118 | 114 | 117 | 113 | 119 | 117,5 |
| MVR [$cm^3$/10min] | 39,7 | 21,2 | 47 | 36 | 41,4 | 28,2 | 42,5 | 23,5 |
| Fliesspirale [cm] | 33,8 | 31,6 | 35,2 | 33,3 | 35,2 | 33,8 | 35,3 | 33,7 |
| E-Modul [Mpa] | 2390 | 2096 | 2443 | 2261 | 2406 | 2214 | 2328 | 2069 |
| Streckspannung [MPa] | 52,50 | 46,13 | 53,69 | 49,65 | 53,04 | 48,67 | 51,12 | 44,59 |
| Bruchspannung [MPa] | 22,77 | 23,42 | 21,91 | 24,88 | 15,17 | 19,60 | 14,60 | 20,76 |
| Streckdehnung [%] | 7,0 | 6,1 | 3,9 | 4,0 | 3,7 | 3,8 | 3,8 | 3,9 |

Tabelle 5

| Komponente [Gew.-%] | 1 | 2 | 3 | 4 | 5 | 6 | 7 | 8 | 9 | 10 | 11 |
|---|---|---|---|---|---|---|---|---|---|---|---|
| A1 | 94 | 89 | 94 | 89 | 94 | 89 | 94 | 89 | 78 | 77,25 | 77 |
| B1/1 | 1 | 1 | 1 | 1 | | | | | | | |
| B1/2 | | | | | 1 | 1 | 1 | 1 | | | |
| B1/3 | | | | | | | | | | 0,75 | 1 |
| C1 | 5 | 10 | | | 5 | 10 | | | | | |
| C2 | | | 5 | 10 | | | 5 | 10 | | | |
| C4 | | | | | | | | | 22 | 22 | 22 |
| VZ [ml/g] | 105 | 112 | 108 | 106 | 112 | 114 | 109 | 111 | 96 | 87 | 85 |
| MVR [$cm^3$/10 min] | 69,9 | 48,7 | 73,6 | 40,3 | 81,8 | 47,2 | 85,2 | 44,2 | 6,5 | 13,5 | 15,2 |
| Fließspirale [cm] | 44,8 | 42,9 | 44,2 | 36,3 | 46,4 | 39,4 | 45,1 | 38,2 | - | - | - |
| E-Modul [MPa] | 2382 | 2121 | 2427 | 2229 | 2403 | 2037 | 2430 | 2220 | 1653 | 1615 | 1590 |
| Streckspannung [MPa] | 52,4 | 46,9 | 53,3 | 48,46 | 53,3 | 45,93 | 54,5 | 48,9 | 35,5 | 35,04 | 34,7 |
| Bruchspannung [%] | 39,1 | 33 | 38,1 | 26,12 | 35,4 | 24,50 | 39,3 | 27 | 27,7 | 27,5 | 27,3 |
| Streckdehnung [%] | 7,4 | 5,8 | 4,1 | 3,9 | 6,9 | 6,1 | 4,1 | 4,1 | 4 | 4 | 4 |
| Schlagzähigkeit | 260 | NB | 186 | 221 | 246 | 292 | 271 | 281 | NB | NB | NB |
| Schlagzähigkeit 23°C, gekerbt | 6,3 | 11,7 | 6,3 | 9,5 | 9,4 | 14,5 | 10,2 | 17,1 | - | - | - |
| NB = no Break | | | | | | | | | | | |

Tabelle 6

| Komponente [Gew.-%] | 1 | 2 | 3 | 4 | 5 | 6 | 7 | 8 |
|---|---|---|---|---|---|---|---|---|
| A1 | 94 | 89 | 94 | 89 | 94 | 88 | 93 | 88 |
| B2 | 1 | 1 | 1 | 1 | 1 | 2 | 2 | 2 |
| C1 | 5 | 10 | | | 5 | 10 | | |
| C2 | | | 5 | 10 | | | 5 | 10 |
| VZ [ml/g] | 118 | 124 | 116 | 114 | 113 | 117 | 112 | 110 |
| MVR [$cm^3$/10 min] | 80,6 | 39,7 | 53,2 | 43,3 | 150 | 99,7 | 87,1 | 60 |
| Spannung [N/mm] bei Max. | 53,86 | 47,3 | 54,6 | 50,1 | 55,6 | 48,8 | 55,7 | 50,9 |
| Bruchdehnung [%] | 12,6 | 16 | 22 | 16,3 | 10,3 | 9,7 | 14,4 | 12,9 |
| Streckdehnung [MPa] | 4,6 | 4,8 | 3,6 | 3,6 | 4,2 | 4,5 | 3,5 | 3,5 |
| E-Modul [MPa] | 2471 | 2149 | 2502 | 2294 | 2513 | 2179 | 2531 | 2333 |
| Schlagzähigkeit [kJ/$m^2$] | 137 | 330 | 177 | 166 | 142 | 91 | 80 | 98,4 |
| Schlagzähigkeit [kJ/$m^2$], gekerbt | 6 | 11,9 | 5,8 | 9,1 | 4,7 | 9,5 | 4,6 | 6,9 |
| Fließspirale [mm] | 42 | 37 | 37 | 34 | 50 | 47 | 44 | 39 |

## Patentansprüche

**1.** Thermoplastische Formmassen, enthaltend

A) 10 bis 98 Gew.-% mindestens eines thermoplastischen Polyesters,
B) 0,01 bis 50 Gew.-%

B1) mindestens eines hoch- oder hyperverzweigten Polycarbonates mit einer OH-Zahl von 1 bis 600 mg KOH/g Polycarbonat (gemäß DIN 53240, Teil 2), oder
B2) mindestens eines hoch- oder hyperverzweigten Polyesters des Typs $A_xB_y$ mit x mindestens 1,1 und y mindestens 2,1 oder deren Mischungen

C) 1 bis 40 Gew.-% eines schlagzähmodifizierenden Polymeren,
D) 0 bis 60 Gew.-% weiterer Zusatzstoffe,

wobei die Summe der Gewichtsprozente der Komponenten A) bis D) 100 % ergibt.

**2.** Thermoplastische Formmassen nach Anspruch 1, in denen die Komponente B1) ein Zahlenmittel des Molekulargewichtes $M_n$ von 100 bis 15000 g/mol aufweist.

**3.** Thermoplastische Formmassen nach den Ansprüchen 1 oder 2, in denen die Komponente B1) eine Glasübergangstemperatur Tg von -80°C bis 140°C aufweist.

**4.** Thermoplastische Formmassen nach den Ansprüchen 1 bis 3, in denen die Komponente B1) eine Viskosität (mPas) bei 23°C (gemäß DIN 53019) von 50 bis 200000 aufweist.

**5.** Thermoplastische Formmassen nach den Ansprüchen 1 bis 4, in denen die Komponente B2) ein Zahlenmittel des Molekulargewichts $M_n$ von 300 bis 30000 g/mol aufweist.

**6.** Thermoplastische Formmassen nach den Ansprüchen 1 bis 5, in denen die Komponente B2) eine Glasübergangstemperatur $T_g$ von -50°C bis 140°C aufweist.

**7.** Thermoplastische Formmassen nach den Ansprüchen 1 bis 6, in denen die Komponente B2) eine OH-Zahl (gemäß

DIN 53240) von 0 bis 600 mg KOH/g Polyester aufweist.

**8.** Thermoplastische Formmassen nach den Ansprüchen 1 bis 7, in denen die Komponente B2) eine COOH-Zahl (gemäß DIN 53240) von 0 bis 600 mg KOH/g Polyester aufweist

**9.** Thermoplastische Formmassen nach den Ansprüchen 1 bis 8, in denen die Komponente B2) wenigstens eine OH-Zahl oder COOH-Zahl größer 0 aufweist.

**10.** Thermoplastische Frommassen nach den Ansprüchen 1 bis 9, in denen das Verhältnis der Komponenten B1): B2) von 1:20 bis 20: 1 beträgt.

**11.** Thermoplastische Formmassen nach den Ansprüchen 1 bis 10, enthaltend als Komponente (c) ein Copolymerisat aus

$C_1$) 40 bis 100 Gew.-% mindestens eines $\alpha$-Olefins mit 2 bis 8 C-Atomen,
$C_2$) 0 bis 90 Gew.-% eines Diens,
$C_3$) 0 bis 45 Gew.-% eines $C_1$-$C_{12}$-Alkylesters der Acrylsäure oder Methacrylsäure oder Mischungen derartiger Ester,
$C_4$) 0 bis 40 Gew.-% einer ethylenisch ungesättigten Mono- oder Dicarbonsäure oder einem funktionellen Derivat einer solchen Säure
$C_5$) 0 bis 40 Gew.-% eines Eopoxygruppen enthaltenden Monomeren,
$C_6$) 0 bis 5 Gew.-% sonstiger radikalisch polymerisierbaren Monomerer,

mit der Maßgabe, dass die Komponente (c) kein Olefinhomopolymerisat ist.

**12.** Thermoplastische Formmassen nach Anspruch 11, enthaltend als Komponente (C) ein Copolymerisat aus

$C_1$) 55 - 79,5 Gew.-% mindestens eines $\alpha$-Olefins mit 2 - 8 C-Atomen,
$C_3$) 20 - 40 Gew.-% eines $C_1$-$C_{12}$-Alkylesters der Acrylsäure oder Methacrylsäure oder Mischungen derartiger Ester
$C_4$) 0,5 - 20 Gew.-% einer ethylenisch ungesättigten Mono- oder Dicarbonsäure oder einem funktionellen Derivat einer solchen Säure
$C_5$) 0 - 20 Gew.-% eines Epoxygruppen enthaltenden Monomeren.

**13.** Thermoplastische Formmassen nach den Ansprüchen 1 bis 12 enthaltend als Komponente C) einen MBS-Kautschuk aufgebaut aus: 65 bis 99 Gew.-% eines Kerns aus

$C_2$) 90 bis 100 Gew.-% eines Diens,
0 bis 10 Gew.-% weiterer vernetzbarer Monomerer
sowie 1 bis 35 Gew.-% einer Schale aus
$C_7$) 0 bis 30 Gew.-% Styrol oder ungesättigten Styrolen oder deren Mischungen und
$C_8$) 70 bis 100 Gew.-% mindestens eines ungesättigten Nitrils.

**14.** Thermoplastische Formmassen nach den Ansprüchen 1 bis 13 enthaltend als Komponente C) einen Acrylat-Kautschuk aufgebaut aus

a) 70 bis 90 Gew.-% vernetzten elastomeren Kern, der sich zusammensetzt aus:

1) 20 bis 90 Gew.-% eines Kerns, der aus einem Copolymer (I) eines n-Alkylacrylats, dessen Alkylgruppe 5 bis 12 Kohlenstoffatome aufweist, oder eines Gemisches von Alkylacrylaten, wobei die Anzahl der Kohlenstoffatome der geradkettigen oder verzweigten Alkylgruppen im Bereich von 2 bis 12 liegt, eines polyfunktionellen Vernetzungsmittels, wobei dieses Molekül ungesättigte Gruppen und darunter mindestens eine Gruppe vom Vinyltyp $CH_2=C<$ aufweist, und gegebenenfalls eines polyfuniktionellen Pfropfungsmittels besteht, wobei dieses Molekül ungesättigte Gruppen und darunter mindestens eine Gruppe vom Allyltyp $CH_2=CH-CH_2$- aufweist, wobei der Kern eine molare Menge des Vernetzungsmittels und gegebenenfalls des Pfropfungsmittels von 0,05 bis 5 % enthält,
2) 80 bis 10 Gew.-% einer Schale, die aus einem Copolymer (II) eines n-Alkylacrylats, dessen Alkylgruppe 4 bis 12 Kohlenstoffatome aufweist, oder eines Gemisches von Alkylacrylaten gemäß der unter 1) angegebenen Definition und eines polyfunktionellen Pfropfungsmittels besteht, wobei dieses Molekül ungesättigte Gruppen und darunter mindestens eine Gruppen vom Allyltyp $CH_2$=CH-$CH_2$- aufweist, wobei die Schale des Pfropfungsmittels in einer molaren Menge von 0,05 bis 2,5 % enthält und

b) 30 bis 10 Gew.-% einer auf den Kern gepfropften Schale, die aus einem Alkylmethacrylatpolymer, dessen Alkylgruppe 1 bis 4 Kohlenstoffatome aufweist, oder aus einem statistischen Copolymer eines Alkylmethacrylats, dessen Alkylgruppe 1 bis 4 Kohlenstoffatome aufweist, und eines Alkylacrylats besteht, dessen Alkylgruppe 1 bis 8 Kohlenstoffatome aufweist, wobei das Alkylacrylat in einer molaren Menge von 5 bis 40 % enthalten ist.

**15.** Verwendung der thermoplastischen Formmassen gemäß den Ansprüchen 1 bis 14 zur Herstellung von Fasern, Folien und Formkörpern jeglicher Art.

**16.** Fasern, Folien und Formkörper jeglicher Art erhältlich aus den thermoplastischen Formmassen gemäß den Ansprüchen 1 bis 14.

**Claims**

**1.** A thermoplastic molding composition, comprising

A) from 10 to 98% by weight of at least one thermoplastic polyester,
B) from 0.01 to 50% by weight of

B1) at least one highly branched or hyperbranched polycarbonate with an OH number of from 1 to 600 mg KOH/g of polycarbonate (to DIN 53240, Part 2), or
B2) at least one highly branched or hyperbranched polyester of $A_xB_y$ type, where x is at least 1.1 and y is at least 2.1, or a mixture of these,

C) from 1 to 40% by weight of an impact-modifying polymer,
D) from 0 to 60% by weight of other additives,

where the total of the percentages by weight of components A) to D) is 100%.

**2.** The thermoplastic molding composition according to claim 1, in which component B1) has a number-average molar mass $M_n$ of from 100 to 15 000 g/mol.

**3.** The thermoplastic molding composition according to claim 1 or 2, in which component B1) has a glass transition temperature Tg of from -80°C to 140°C.

**4.** The thermoplastic molding composition according to claims 1 to 3, in which component B1) has a viscosity (mPas) at 23°C (to DIN 53019) of from 50 to 200 000.

**5.** The thermoplastic molding composition according to claims 1 to 4, in which component B2) has a number-average molar mass $M_n$ of from 300 to 30 000 g/mol.

**6.** The thermoplastic molding composition according to claims 1 to 5, in which component B2) has a glass transition temperature $T_g$ of from -50°C to 140°C.

**7.** The thermoplastic molding composition according to claims 1 to 6, in which component B2) has an OH number (to DIN 53240) of from 0 to 600 mg KOH/g of polyester.

**8.** The thermoplastic molding composition according to claims 1 to 7, in which component B2) has a COOH number (to DIN 53240) of from 0 to 600 mg KOH/g of polyester.

**9.** The thermoplastic molding composition according to claims 1 to 8, in which component B2) has at least one OH number or COOH number greater than 0.

**10.** The thermoplastic molding composition according to claims 1 to 9, in which the ratio of the components B1) : B2)

is from 1:20 to 20:1.

**11.** The thermoplastic molding composition according to claims 1 to 10, comprising, as component (c), a copolymer composed of

$C_1$) from 40 to 100% by weight of at least one α-olefin having from 2 to 8 carbon atoms,
$C_2$) from 0 to 90% by weight of a diene,
$C_3$) from 0 to 45% by weight of a $C_1$-$C_{12}$-alkyl ester of acrylic acid or methacrylic acid, or a mixture of these esters,
$C_4$) from 0 to 40% by weight of an ethylenically unsaturated mono- or dicarboxylic acid, or of a functional derivative of this acid,
$C_5$) from 0 to 40% by weight of a monomer containing epoxy groups,
$C_6$) from 0 to 5% by weight of other monomers capable of free-radical polymerization,

with the proviso that component (c) is not an olefin homopolymer.

**12.** The thermoplastic molding composition according to claim 11, comprising, as component (C), a copolymer composed of

$C_1$) from 55 to 79.5% by weight of at least one α-olefin having from 2 to 8 carbon atoms,
$C_3$) from 20 to 40% by weight of a $C_1$-$C_{12}$-alkyl ester of acrylic or methacrylic acid, or a mixture of these esters,
$C_4$) from 0.5 to 20% by weight of an ethylenically unsaturated mono- or dicarboxylic acid, or of a functional derivative of this acid,
$C_5$) from 0 to 20% by weight of a monomer comprising epoxy groups.

**13.** The thermoplastic molding composition according to claims 1 to 12, comprising, as component C), an MBS rubber composed of:

from 65 to 99% by weight of a core composed of

$C_2$) from 90 to 100% by weight of a diene, from 0 to 10% by weight of other crosslinkable monomers, and also from 1 to 35% by weight of a shell composed of
$C_7$) from 0 to 30% by weight of styrene or of unsaturated styrenes, or a mixture of these, and
$C_8$) from 70 to 100% by weight of at least one unsaturated nitrile.

**14.** The thermoplastic molding composition according to claims 1 to 13, comprising, as component C), an acrylate rubber composed of

a) from 70 to 90% by weight of crosslinked elastomeric core, composed of:

1) from 20 to 90% by weight of a core composed of a copolymer (I) of an n-alkyl acrylate whose alkyl group has from 5 to 12 carbon atoms or of a mixture of alkyl acrylates, where the number of the carbon atoms in straight-chain or branched alkyl groups is in the range from 2 to 12; of a polyfunctional crosslinking agent, where this molecule has unsaturated groups and, among these, at least one $CH_2=C<$ group of vinyl type, and, if appropriate, is composed of a polyfunctional grafting agent, where this molecule has unsaturated groups and, among these, at least one $CH_2=CH-CH_2-$ group of allyl type, where the core comprises a molar amount of the crosslinking agent and, if appropriate, of the grafting agent, of from 0.05 to 5%,
2) from 80 to 10% by weight of a shell which is composed of a copolymer (II) of an n-alkyl acrylate whose alkyl group has from 4 to 12 carbon atoms or of a mixture of alkyl acrylates as defined under 1), and of a polyfunctional grafting agent, where this molecule has unsaturated groups and, among these, at least one $CH_2=CH-CH_2-$ group of allyl type, where the shell comprises a molar amount of from 0.05 to 2.5% of the grafting agent and

b) from 30 to 10% by weight of a shell, grafted onto the core and composed of an alkyl methacrylate polymer whose alkyl group has from 1 to 4 carbon atoms, or composed of a random copolymer of an alkyl methacrylate whose alkyl group has from 1 to 4 carbon atoms with an alkyl acrylate whose alkyl group has from 1 to 8 carbon atoms, the molar amount present of the alkyl acrylate being from 5 to 40%.

**15.** The use of the thermoplastic molding compositions according to claims 1 to 14 for the production of fibers, foils, or

moldings of any type.

16. A fiber, a foil, or a molding of any type obtainable from the thermoplastic molding compositions according to claims 1 to 14.

**Revendications**

1. Matériaux de moulage thermoplastiques, contenant

A) 10 à 98 % en poids d'au moins un polyester thermoplastique,
B) 0,01 à 50 % en poids de

B1) au moins un polycarbonate hautement ou hyper-ramifié ayant un indice OH de 1 à 600 mg de KOH/g de polycarbonate (selon DIN 53240, Partie 2), ou
B2) au moins un polyester hautement ou hyper-ramifié du type $A_xB_y$ avec x valant au moins 1,1 et y valant au moins 2,1, ou leurs mélanges

C) 1 à 40 % en poids d'un polymère modifiant la résistance aux impacts,
D) 0 à 60 % en poids d'additifs supplémentaires,

la somme des pourcentages en poids des composants A) à D) étant de 100 %.

2. Matériaux de moulage thermoplastiques selon la revendication 1, dans lesquels le composant B1) présente une moyenne en nombre du poids moléculaire $M_n$ de 100 à 15 000 g/mol.

3. Matériaux de moulage thermoplastiques selon les revendications 1 ou 2, dans lesquels le composant B1) présente une température de transition vitreuse $T_g$ de - 80 °C à 140 °C.

4. Matériaux de moulage thermoplastiques selon les revendications 1 à 3, dans lesquels le composant B1) présente une viscosité (mPas) à 23 °C (selon DIN 53019) de 50 à 200 000.

5. Matériaux de moulage thermoplastiques selon les revendications 1 à 4, dans lesquels le composant B2) présente une moyenne en nombre du poids moléculaire $M_n$ de 300 à 30 000 g/mol.

6. Matériaux de moulage thermoplastiques selon les revendications 1 à 5, dans lesquels le composant B2) présente une température de transition vitreuse $T_g$ de - 50 °C à 140 °C.

7. Matériaux de moulage thermoplastiques selon les revendications 1 à 6, dans lesquels le composant B2) présente un indice OH (selon DIN 53240) de 0 à 600 mg de KOH/g de polyester.

8. Matériaux de moulage thermoplastiques selon les revendications 1 à 7, dans lesquels le composant B2) présente un indice COOH (selon DIN 53240) de 0 à 600 mg de KOH/g de polyester.

9. Matériaux de moulage thermoplastiques selon les revendications 1 à 8, dans lesquels le composant B2) présente au moins un indice OH ou un indice COOH supérieur à 0.

10. Matériaux de moulage thermoplastiques selon les revendications 1 à 9, dans lesquels le rapport entre les composants B1):B2) est de 1:20 à 20:1.

11. Matériaux de moulage thermoplastiques selon les revendications 1 à 10, contenant en tant que composant C) un copolymère de

$C_1$) 40 à 100 % en poids d'au moins une α-oléfine contenant 2 à 8 atomes C,
$C_2$) 0 à 90 % en poids d'un diène,
$C_3$) 0 à 45 % en poids d'un ester d'alkyle en $C_1$-$C_{12}$ de l'acide acrylique ou de l'acide méthacrylique ou des mélanges de tels esters,
$C_4$) 0 à 40 % en poids d'un acide mono- ou dicarboxylique éthyléniquement insaturé ou d'un dérivé fonctionnel

d'un tel acide,
$C_5$) 0 à 40 % en poids d'un monomère contenant des groupes époxy,
$C_6$) 0 à 5 % en poids d'autres monomères polymérisables par voie radicalaire,

à condition que le composant C) ne soit pas un homopolymère oléfinique.

**12.** Matériaux de moulage thermoplastiques selon la revendication 11, contenant en tant que composant C) un copolymère de

$C_1$) 55 à 79,5 % en poids d'au moins une $\alpha$-oléfine contenant 2 à 8 atomes C,
$C_3$) 20 à 40 % en poids d'un ester d'alkyle en $C_1$-$C_{12}$ de l'acide acrylique ou de l'acide méthacrylique ou des mélanges de tels esters,
$C_4$) 0, 5 à 20 % en poids d'un acide mono- ou dicarboxylique éthyléniquement insaturé ou d'un dérivé fonctionnel d'un tel acide,
$C_5$) 0 à 20 % en poids d'un monomère contenant des groupes époxy.

**13.** Matériaux de moulage thermoplastiques selon les revendications 1 à 12, contenant en tant que composant C) un caoutchouc MBS formé à partir de :

65 à 99 % en poids d'un noyau à base de

$C_2$) 90 à 100 % en poids d'un diène,
0 à 10 % en poids d'autres monomères réticulables
et 1 à 35 % en poids d'une enveloppe à base de
$C_7$) 0 à 30 % en poids de styrène ou de styrènes insaturés ou leurs mélanges et
$C_8$) 70 à 100 % en poids d'au moins un nitrile insaturé.

**14.** Matériaux de moulage thermoplastiques selon les revendications 1 à 13, contenant en tant que composant C) un caoutchouc d'acrylate formé à partir de

a) 70 à 90 % en poids d'un noyau élastomère réticulé, qui est composé de :

1) 20 à 90 % en poids d'un noyau, qui est constitué d'un copolymère (I) d'un acrylate de n-alkyle, dont le groupe alkyle comporte 5 à 12 atomes de carbone, ou d'un mélange d'acrylates d'alkyle, le nombre d'atomes de carbone des groupes alkyle linéaires ou ramifiés se si tuant dans la plage allant de 2 à 12, d' un agent de réticulation polyfonctionnel, cette molécule comprenant des groupes insaturés et parmi eux au moins un groupe de type vinyle $CH_2$=C<, et éventuellement d'un agent de greffage polyfonctionnel, cette molécule comportant des groupes insaturés et parmi eux au moins un groupe de type allyle $CH_2$=CH-$CH_2$-, le noyau contenant une quantité molaire de l'agent de réticulation et éventuellement de l'agent de greffage de 0,05 à 5 %,
2) 80 à 10 % en poids d'une enveloppe, qui est constituée d'un copolymère (II) d'un acrylate de n-alkyle, dont le groupe alkyle comporte 4 à 12 atomes de carbone, ou d'un mélange d'acrylates d'alkyle selon la définition donnée en 1), et d'un agent de greffage polyfonctionnel, cette molécule comportant des groupes insaturés et parmi eux au moins un groupe de type allyle $CH_2$=CH-$CH_2$-, l'enveloppe contenant l'agent de greffage en une quantité molaire de 0,05 à 2,5 %, et

b) 30 à 10 % en poids d'une enveloppe greffée sur le noyau, qui est constituée d'un polymère de méthacrylate d'alkyle, dont le groupe alkyle comporte 1 à 4 atomes de carbone, ou d'un copolymère statistique d'un méthacrylate d'alkyle, dont le groupe alkyle comporte 1 à 4 atomes de carbone, et d'un acrylate d'alkyle, dont le groupe alkyle comporte 1 à 8 atomes de carbone, l'acrylate d'alkyle étant contenu en une quantité molaire de 5 à 40 %.

**15.** Utilisation des matériaux de moulage thermoplastiques selon les revendications 1 à 14 pour la fabrication de fibres, de films et de corps moulés de type quelconque.

**16.** Fibres, films et corps moulés de type quelconque, pouvant être obtenus à partir des matériaux de moulage thermoplastiques selon les revendications 1 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3305605 A
- WO 9850453 A
- WO 9745474 A
- DE 10132928 A
- DE 102004005652
- DE 102004005657
- DE 4401055 A
- US 3651014 A
- DE OS3334782 A
- DE OS2842005 A
- DE 3506472 A
- EP 711810 A
- EP 365916 A
- DE 10138216
- DE 10147712
- DE 10163163 A
- EP 776915 A


### In der Beschreibung aufgeführte Nicht-Patentliteratur


- **Kunststoff-Handbuch.** Polycarbonate, Polyacetale, Polyester, Celluloseester. Carl-Hanser-Verlag, 1992, vol. 3/1, 118-119
- **S. P. Rannard ; N. J. Davis.** *J. Am. Chem. Soc.,* 2000, vol. 122, 11729
- **D.H. Bolton ; K. L. Wooley.** *Macromolecules,* 1997, vol. 30, 1890
- **P.J. Flory.** *J. Am. Chem. Soc.,* 1952, vol. 74, 2718
- **H. Frey et al.** *Chem. Eur. J.,* 2000, vol. 6 (14), 2499
- **H. Frey et al.** *Acta Polym.,* 1997, vol. 48, 30
- Ullmann's Encyclopedia of Industrial Chemistry. Verlag Wiley-VCH, 2000
- Biotransformations in organic chemistry. Immobilization. Springer Verlag, 1997, 345-356
- **A. Sunder et al.** *Chem. Eur. J.,* 2000, vol. 6 (1), 1-8
- **Schildknecht.** Vinyl and Related Polymers. Wiley-Verlag, 1952, 484-494
- **Wall.** Fluorpolymers. Wiley Interscience, 1972